# EUROPEAN PATENT SPECIFICATION

(11) **EP 1 002 438 B1**
(45) Date of publication and mention of the grant of the patent: **11.01.2006**
(21) Application number: 98945167.9
(22) Date of filing: 30.07.1998
(51) Int. Cl.: H04Q 7/36, H04B 7/26

(54) **A METHOD AND AN ARRANGEMENT SUPPORTING PROPAGATION DELAY COMPENSATION**
VERFAHREN UND ANORDNUNG ZUR UNTERSTÜTZUNG DES LAUFZEITAUSGLEICHS
PROCEDE ET DISPOSITIF DE COMPENSATION DE TEMPS DE PROPAGATION

(30) Priority: 06.08.1997 EP 97202442
(43) Date of publication of application: 24.05.2000
(73) Proprietor: TELEFONAKTIEBOLAGET LM ERICSSON (publ), 164 83 Stockholm (SE)
(72) Inventor: BOLT, Jacob, Hendrik, NL-7559 CM Hengelo (NL)
(74) Representative: Dohmen, Johannes Maria Gerardus
(86) International application number: PCT/EP1998/004993
(87) International publication number: WO 1999/008465

(56) References cited:
- EP-A- 0 511 861
- WO-A-97/01254
- US-A- 5 444 698
- US-A- 5 544 171
- US-A- 5 615 215

## Description

### Field of the Invention

The present invention relates to a method and an arrangement for propagation delay compensation in radio telecommunications systems and, more specifically, in Multiple Carrier-Time Division Multiple Access/Time Division Duplex (MC-TDMA/TDD) radio telecommunications systems, such as Digital Enhanced Cordless Telecommunications (DECT) based Radio in the Local Loop (RLL) telecommunications systems.

### Background of the Invention

In conventional Public Switched Telephone Networks (PSTN) and Integrated Services Digital Networks (ISDN), for example, up till now the overwhelming majority of residential and office subscribers have a wired connection from the subscriber premises to a public local exchange. These subscriber connections, which may run via an intermediate concentrator, are referred to as the local loop.

The installation of such wired links all the way to the subscriber premises is both time consuming and involves substantial networking costs, apart from troubles caused by the interruption of streets and pavements. Therefore, there is a growing interest in replacing the wired local loop by a so-called wireless local loop, i.e. using radio technology as an alternative. This is not only of interest for the present network operators in case of expansion or renovation of the existing public telecommunication networks but, in particular, for new operators which would like to provide competitive public telecommunication services, such as a public telephone service. In less dense rural areas, wireless local loops can substantially save network installation costs. The concept of wireless public subscriber connections is called Radio in the Local Loop (RLL).

Within the concept of RLL, two basic systems can be distinguished: Fixed RLL (FRLL) and Mobile RLL (MRLL). In the FRLL system, the subscriber is provided with an ordinary telephone socket connected to a fixedly mounted radio transceiver, also called Fixed Access Unit (FAU) or Wireless Fixed Access Unit (WFAU). Via this FAU/WFAU a fixed radio link is established with a so-called Radio Access Unit (RAU), which provides access to the PSTN/ISDN. In the MRLL concept, the subscriber is provided with a portable cordless or mobile radio telecommunication device, such as a telephone handset, by which, via the RAU, direct access to the PSTN/ISDN can be established.

Mixed concepts are also possible, i.e. FRLL providing mobility at the subscriber premises, also called Cordless In The Home (CITH) and residential or neighbourhood mobility, also called Cordless In The Neighbourhood (CITN). In some countries, governmental regulations prevent the established telephone operators from offering local mobility in the present PSTN/ISDN. In such cases, it is very advantageous for a second or third operator to offer both fixed and mobile or cordless access to the PSTN/ISDN.

A RAU in an RLL system generally provides service to a plurality of remote FAU/WFAU and telecommunication devices in its respective coverage area or cell. Depending on the radius of such cell, one distinguishes picocells (a few metres), nanocells (up to 10 m), microcells (10 to 400 m), macrocells (400 m-5 km) and large cells (5 km and up).

MC-TDMA/TDD is a transmission technology wherein a preassigned frequency spectrum is divided into multiple carriers which are time division multiplexed. That is, each carrier has been divided into so-called frames and each frame comprises a number of time-slots. Each time-slot is repetitively available at a predetermined space in time. The transmitter sends short bursts of information in an assigned time slot, called a transmit (Tx) slot, and the receiver listens in a concurrent time slot, called a receive (Rx) slot. TDD makes use of two time slots (one for transmitting and one for receiving) generally in the same carrier and frame, thereby providing a duplex radio channel.

As appreciated by those skilled in the art, due to their non-infinite propagation speed, radio signals encounter a certain propagation delay. That is, a burst transmitted by a RAU is received at a FAU after a time equal to the propagation delay and a particular internal processing delay. The propagation delay is subject to the distance which a radio signal travels from the RAU to the FAU or vice versa.

Between each slot in a frame there is a so-called guard space or guard band. Such as guard space contains no information and prohibits one time slot from intruding into an adjacent due to the various propagation delays between the RAU and remote FAU's. If the distance between a FAU and RAU exceeds a certain limit bounded by the size of the guard space, e.g. due to excessive propagation delays, time slots are not received at their expected positions in a frame, such that the risk of intruding into another time slot becomes apparent.

In order to compensate for such propagation delays, in practice, the radio bursts are transmitted earlier (advanced) such that they are received at their predefined space in time, i.e. the predefined frame position at the receiving unit, or the bursts are transmitted in time yet the receiver is delayed (retarded). Accordingly, the time slot positions at the transmitter and/or the receiver are virtually time shifted subject to the propagation delay encountered.

European Patent Application EP-A-0,511,861 discloses a TDMA system comprising a mobile station having propagation time delay compensation. The communication system includes a plurality of base stations located a cell sites. Each base station is capable of calculating the amount of propagation delay between the cell site and each mobile station, using a signal received from mobile stations in a known manner.

However, with regard to the maximum distance between a RAU and a FAU/WFAU and/or a mobile telecommunication device, the nominal size of the guard space between adjacent time slots is a bounding parameter to the maximum time shift of slots and, accordingly, the maximum transmission range. This, because the maximum shift in timing of a time slot may go not that far such that overlapping adjacent time slots in a frame occur, which leads to corruption of the transmission.

In DECT, for example, the standardized size of the guard space amounts 56 bits. Following the standardized bit rate of 1152 kb/s and a propagation speed of radio signals of 3*10⁸ m/s, the maximum distance between a FAU and a RAU without slot intrusion is limited to about 5 km. Accordingly, a problem arises if one would like to cover larger ranges, for example in less densely populated areas or sites.

### Summary of the Invention

Accordingly, it is an object of the present invention to provide a method and equipment for extending the transmission range in a TDMA radio communication system, in particular a MC-TDMA/TDD radio communication system, not limited by a guard band or guard space.

According to the present invention, there is provided a Propagation Delay Compensation (PDC) method for compensating the propagation delay between a RAU and a FAU/WFAU and/or a mobile communication device encountered by radio signals travelling through the air or any other transmission medium.

In an embodiment, the invention provides a method of extending the reachable distance of a radio transmission link between a Radio Access Unit (RAU) or base station and a remote fixed or mobile radio communication device of a Time Division Multiple Access (TDMA) radio telecommunication system, in particular a radio telecommunication system operating in accordance with the Digital Enhanced Cordless Telecommunications (DECT) standard, arranged for compensating propagation delay at said transmission link by establishing the distance or propagation delay between said RAU and remote fixed or mobile radio communication device, and advancing in time the transmission of a transmit (Tx) time slot, characterized by the steps of establishing in respect of said Tx time slot one of a group of cases:
- the previous time slot is a receive time slot, case 1,
- the previous time slot is a transmit time slot having a link to the same RAU as said Tx time slot, case 2a,
- the previous time slot is a transmit time slot having a link to another RAU, case 2b, and
- in the event of case 1 or case 2b, if said distance or propagation delay between said RAU and fixed or mobile radio communication device is larger than a predetermined value related to a guard space or guard band between adjacent time slots, changing the said Tx time slot to another available Tx time slot having a free previous transmit time slot or to another available Tx time slot which meets case 2a.

The delay compensation. i.e. advancing the Tx time slot in timing, is preferably performed in the remote FAU/WFAU or mobile telecommunication device connecting directly to a RAU.

As discussed above, if the propagation delay of the radio signals on a communication link between a RAU and a remote unit in terms of bit positions is below the size of the guard space, no risk is foreseen in that by advancing in time of a Tx time slot intrusion of a previous time slot will occur.

However, if the propagation delay exceeds the size of the guard space, there is a serious risk in that by advancing in time of a Tx time slot a previous time slot will be intruded.

In TDMA radio transmission systems, a particular transmit/receive time slot pair is, at least temporarily, individual to a transmission link between a RAU and a remote FAU/WFAU. or mobile telecommunication device connecting to the RAU. Those skilled in the art will appreciate that a transmit/receive time slot pair may change during a call, due to handovers within the same RAU. For example, if another mobile telecommunication device comes in the transmission range of the RAU, which mobile telecommunication device is transmitting on the same transmit/receive time slot pair, however connected to a different RAU, or if a particular mobile telecommunication device moves from one RAU to another. Note that a transmit/receive time slot pair between a RAU and a FAU/WFAU is also subject to handovers if a mobile telecommunication device moves into a transmission range of the RAU.

Following the improved PDC method according to the present invention, the type of the previous time slot relative to a Tx time slot which has to be advanced in time is established.

If such previous time slot is a receive time slot, the particular Tx time slot may not be advanced in time beyond the guard space, because this would lead to transmission by a remote unit at such point in time that another remote unit in the same cell is receiving information from the RAU. This typically occurs in a TDMA/TDD system having adjacent transmit and receive time slots. However, this problem may also occur in an environment of asynchronous TDMA radio telecommunication systems, for example.

If the previous time slot is a transmit time slot the relevant Tx time slot can be advanced in time beyond the guard space or guard band only if both transmit time slots belong to transmission links to the same RAU. This, because in such case, at the RAU the transmit time slots are received at their expected position in the frame, such that no time slot intrusion will occur.

However, if the transmit time slots relate to transmission links with different RAU's, there is a risk that the time advanced Tx time slot of a transmission link to a first RAU will be received earlier or later at a second RAU, such that time slots received at the second RAU will be intruded by the time advanced Tx time slot.

Accordingly, in the event of case 1 or case 2b, the relevant Tx time slot can not be used for propagation delay purposes beyond the guard space, such that another available transmit time slot in the frame has to be used. This other transmit time slot has to meet the conditions defined above as case 2a.

Please note that case 2a is only applicable in case of occupied transmit time slots. In case of a free previous transmit time slot, following the method according to the present invention, there is virtually no risk of slot intrusion.

For establishing the type of time slot i.e. receive or transmit and to which RAU a previous time slot belongs, use can be made of system data which is made available with each time slot, for example, such as in DECT. Further, in DECT, a mechanism called Continuous Dynamic Channel Allocation (DCDA) is available, with which a FAU/WFAU or mobile telecommunication device gets an overview of available time slots. That is, time slots which are not occupied by radio links to the same or different RAU's.

The delay which radio signals encountered on a particular radio link can be measured either in the RAU or the remote unit. Preferably, at the RAU site it is measured how much a radio signal, i.e. a time slot, arrives earlier or late. By averaging received time positions of time slots send from a remote unit, the RAU can establish the propagation time delay on a particular radio link and transmit same to the remote device in order to go upwards, downwards or stay with a particular time advancement of a Tx time slot. A close loop can be formed between a RAU and a remote device, in order to provide early compensation at the remote device and such that at the RAU time slots are received at their defined position in a frame.

In a further embodiment the method according to the invention comprises at set-up of a transmission link the steps of:
- advancing said Tx time slot in said remote fixed or mobile radio communication device according to a formula b*N, wherein b is a predefined fraction of a maximum range of said transmission link and wherein N is an integer ranging from 1 until b*N exceeds a predetermined maximum value, by stepwise incrementing said integer N until reception of said Tx time slot at said RAU,
- determining the value of said fraction b times said integer N, and
- in the event of case 1 or case 2b changing the said Tx time slot if said product b*N exceeds a predetermined value.

With the improved PDC method according to the invention, the reachable distance on TDMA transmission links can be considerably extended above the distance provided by the guard space. For example, in a DECT transmission system, distances of 5 km and up can be achieved, which is very advantageous in case of RLL applications in less densely populated rural areas, for example.

According to the present invention there is also provided an arrangement for extending the reachable distance of transmission links in a Time Division Multiple Access (TDMA) radio telecommunication system, in particular a radio telecommunication system operating in accordance with the Digital Enhanced Cordless Telecommunications (DECT) standard, said radio telecommunication system comprising Radio Access Units (RAU's) or base stations operatively connecting to a (Public) Switched Telephone Network ((P)STN) and/or an Integrated Services Digital Network (ISDN), and remote fixed or mobile radio telecommunication devices, said RAU's and remote telecommunication devices being arranged for establishing a radio transmission link between a RAU and a remote fixed or mobile radio communication device, said arrangement further comprising means for establishing the distance or propagation delay between said RAU and remote fixed or mobile radio communication device, and means for compensating said propagation delay at said transmission link by advancing in time the transmission of a transmit Tx time slot, characterized in that said arrangement comprising means for establishing in respect of said Tx time slot one of group of cases:
- the previous time slot is a receive time slot, case 1,
- the previous time slot is a transmit time slot having a link to the same RAU as said Tx time slot, case 2a,
- the previous time slot is a transmit time slot having a link to another RAU, case 2b, and means which
- in the event of case 1 or case 2b, if said distance or propagation time delay between said RAU and fixed or mobile radio communication device is larger than a predetermined value related to a guard space between adjacent time slots, change the said Tx time slot to another available Tx time slot having a free previous transmit time slot or to another available Tx time slot which meets case 2a.

The invention further relates to a remote unit, such as a FAU/WFAU or a mobile radio communication device and a radio access unit for use in an arrangement as disclosed above.

The present invention can be implemented on existing DECT equipment for example, or any other TDMA equipment and/or can be implemented in an Application Specific Integrated Circuit (ASIC) for use in TDMA equipment.

The above-mentioned and other features and advantages of the invention are illustrated in the following description with reference to a DECT RLL system and the enclosed drawings, which are given by way of illustration only, and which are not limitative to the present invention.

### Brief Description of the Drawings

Fig. 1 shows, in a very schematic manner, a prior art RLL system providing both FRLL and MRLL.
Fig. 2 shows, in a schematic and illustrative manner, a prior art digital data stream comprising data bursts.
Fig 3 shows in detail the structure of a data burst of fig 2.
Fig. 4 shows in a schematic and illustrative manner, the improved Propagation Delay Compensation method according to the present invention.

### Detailed Description of Preferred Embodiments

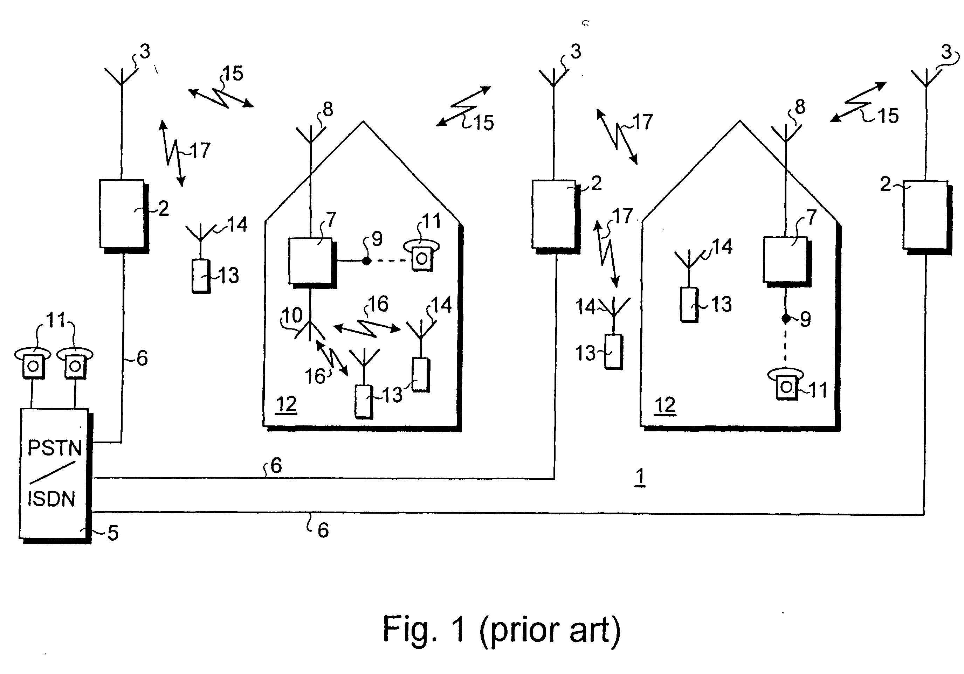

Fig. 1 shows an example of an RLL telecommunication system providing fixed (FRLL) and mobile (MRLL) radio access, such as disclosed by International Patent Application WO 94/19877. The system is generally designated with reference numeral 1 and comprises a plurality of Radio Access Units (RAU's) or base stations 2, each comprising a radio transceiver unit, the transceiver output of which is connected to a receive/transmit antenna 3. The base stations 2 are further coupled to an exchange or switch 5, for connection to a telephone and/or data network, e.g. the public Switched Telephone Network (PSTN) and/or Integrated Services Digital Network (ISDN). Although the connections to the exchange 5 are shown in the form of a cable 6, i.e. a copper wire or an optical fiber, this may be also a microwave link, for example.

The system further comprises a number of remote Wireless Fixed Access Units (W)FAU 7, comprising a radio transceiver unit connected to a receive/transmit antenna 8, for establishing a radio communication link 15 with a RAU 2. The remote units 7 comprise either one or both a telephone terminal 9 for connecting an ordinary wire-type telephone 11 and a further receive/transmit antenna 10. As illustrated, the remote units 7 are fixedly installed in (or at) a building 12, such as a house or the like. The antenna 8 may be an indoor or an outdoor antenna.

Besides fixedly installed remote units 7, the system comprises also several mobile remote units 13, in the form of telephone handsets, for example. These mobile remote units 13 each comprises a transceiver unit, one end of which is connected to a microphone/loudspeaker arrangement for voice communication, for example. As illustrated, these mobile remote units 13 can be used inside or outside the building 12, to establish a radio link 16 with the fixed remote units 7, via the indoor antenna 10 and the mobile antenna 14, or for establishing a direct radio link 17 with a RAU 2, via their respective antennas 3 and 14.

In case of base stations 2 operating in accordance with the existing low power cordless Time Division Multiple Access (TDMA) technologies such as designated CT3, PHS and DECT, each of these base stations covers a limited area having the size of a pico-, nano- or microcell. Accordingly, a large number of such base stations 2 have to be installed and connected to the exchange 5 in order to cover extensive residential or metropolitan areas, for example.

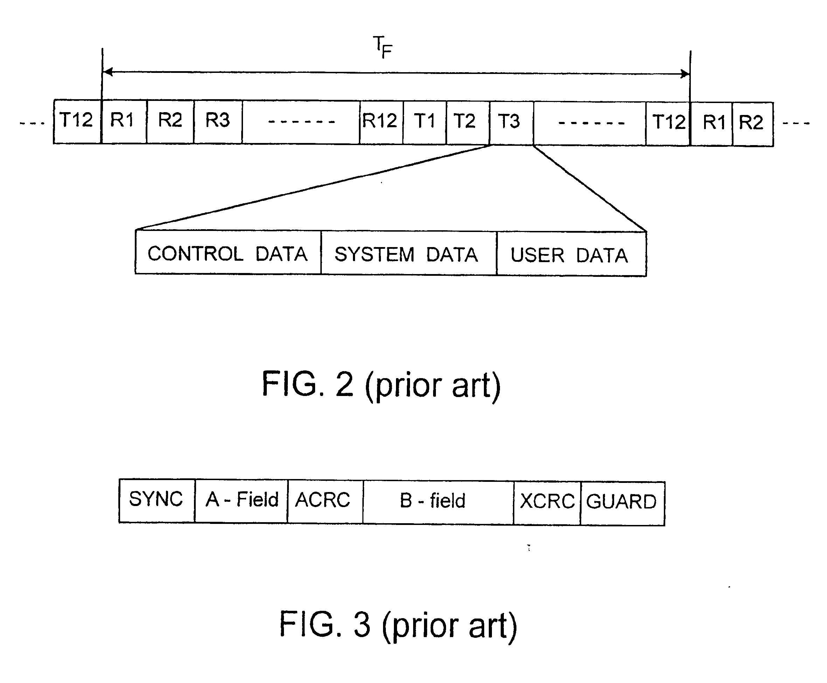

Under the Digital Enhanced Cordless Telecommunications (DECT) technology the information over the air link is transmitted using a frame structure shown in figure 2. During the first halve of the frame, i.e. the first twelve time slots designated R1, R2,..., R12, data from the radio access units 2 are received by a handset 13 or (W)FAU 7 (i.e. downlink), whereas in the second halve of the frame, i.e. the second twelve time-slots designated T1, T2,..., T12, the remote communication units 7,13 transmit data to the radio access unit 2 (i.e. uplink). A radio communication link between a radio access unit and a remote communication unit is assigned a slot in the first half of the frame and a slot bearing the same number in the second halve of the frame. For example, in DECT the number of time slots in a frame is 24, which means 12 time slots for an uplink and 12 slots for a downlink. Each time slot typically contains control data, system data and information or user data.

A more detailed time slot structure is shown in figure 3. The control data field contains a so-called synchronization (SYNC) word, which has to be correctly identified at a RAU and (W)FAU or mobile remote radio unit in order to process the received data. SYNC data will typically need 16 bits, preceded by a preamble of 16 bits.

The system data field regularly contains system information on slot type, identity and access rights, services availability and, when required, information for handover to another communication channel in case of disturbances or transfer of a call to another radio access unit. Also paging and call set-up procedures are carried over the system data field, which is also called A-FIELD. System data will typically need 64 bits with a 16 bit Cyclic Redundancy Check word designated ACRC.

The information or user data, also called B-FIELD, comprise in case of a telephone call digitized speech samples obtained during the frame cycle time T_{F} of 10 ms. The B-FIELD data contains 80 speech samples of 4 bit each.

The B-FIELD data is scrambled and a 4 bit Cyclic Redundancy Check word XCRC is formed from the information data.

The guard space, GUARD prevents adjacent time slots from intruding into each other because of propagation delay of the radio signals. The standardized DECT guard space contains 56 bits.

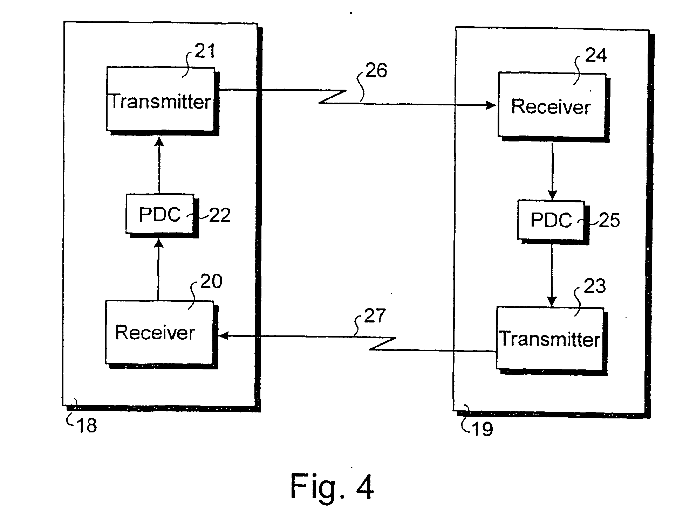

Referring to figure 4, there is schematically shown an embodiment of a Radio Access Unit (RAU) 18 and a Fixed Access Unit (FAU) 19 according to the present invention for use in a Digital Enhanced Cordless Telecommunication (DECT) system. The RAU 18 comprises a receiver 20, a transmitter 21 and Propagation Delay Compensation (PDC) measurement means 22. The FAU 19 comprises a transmitter 23, a receiver 24 and Propagation Delay Compensation (PDC) execution means 25.

The RAU 18 transmits downlink 26 in transmit time slots Tx at their predetermined, nominal position in time. This is the DECT timing reference according to theories well known to the person skilled in the art, and thus will not need to be described in more detail here. The FAU 19 receives the transmitted data in a slot Rx with a propagation delay D. The slot Tx which the FAU 19 sends back uplink 27 to the RAU 18 is judged for its timing by the RAU 18. The RAU 18 interprets the difference of actual received timing position and the desired position by its PDC measurement device 22.

The difference is calculated and averaged over a number of frames. Said number of frames may for example be ten. The RAU 18 sends via the A-FIELD information towards the FAU 19 whether a bit up or down PDC shift is needed or via a so called bit toggle sequence indicating that no PDC shift is necessary. At a stabilized loop, the FAU 19 will compensate by its PDC execution device 25 for all the upstream 26 and downstream 27 propagation delay, that is 2*D. The FAU 19 compensates by transmitting earlier its Tx time slots.

When the PDC loop adapts such that in the FAU 19 is observed that PDC compensation values exceed a predefined value of compensation, the first point is the risk that an advanced FAU Tx time slots intrudes in the previous time slot. The method according to the present invention for preventing this, is as follows:
Define case 1: previous time slot is a receive time slot;
Define case 2a: previous time slot is another transmit time slot belonging to a device having a link to the same RAU 18;
Define case 2b: previous slot is another transmit time slot belonging to a device having a link to another RAU, i.e. not RAU 18.

Case 1 happens if the Tx slot is adjacent to the last receive slot in the same frame (e.g. T1 adjacent R12 in fig. 12). The Tx slot may not be advanced in timing beyond the guard space according to the rules of non-intruding into neighbouring time slots. In this case the inventive Propagation Delay Compensation method does a handover to an other available channel.

In case 2a a well-defined situation appears for timing. This is illustrated in the following: Observe the transmit time slots of the FAU 19 transmitted to its RAU 18. The inventive Propagation Delay Compensation method, if in its stabilized state, takes care that time advanced Tx time slots arrive at nominal timing positions at the RAU 18. This is true for any FAU 19 at any distance in the allowed range. The allowed range is a system parameter.

If one draws concentric circles around the RAU 18, everywhere on one such circle it holds that all the Tx slots of different FAU's 19, observed at points on such circles, have the same time position. This is due to the constant propagation speed of the radio signals.

This again means at any point in the coverage area of the RAU 18 one can imagine such circles and consequential draw the next conclusion: Tx slots compensated by the Propagation Delay Compensation method, produced by different FAU's 19 locked on the same RAU 18, are relatively time positioned with a guard space in between them or a number of time slots distance in time. This holds for all FAU's 19 at any distance in the coverage range of a RAU 18. Accordingly, no slot intrusion will occur even by advancing of Tx slots beyond the guard space.

Having observed this, in case 2a no reason exists to handover to another time slot.

In case 2b, no knowledge is available about what the time shift is of the previous slot. This is due to the fact that the other RAU locked to by the previous transmit slot will have any distance to the own RAU.

Consequentially, for case 2b there is to perform a handover to an other available channel.

It will be appreciated that handovers to other transmit time slots have to be made such that the condition of the above case 2a is full filled for such other transmit time slot. Handovers may be performed to a later transmit slot in the frame at the same carrier or, in case of a Multiple Carrier (MC) TDMA system to a later transmit slot in a frame at a different carrier.

In DECT, the remote units (W)FAU or mobile communication units maintain a list of available channels or time slot pairs following the known Continuous Dynamic Channel Allocation (CDCA) algorithm.

When a radio link is to be set up, the FAU 19 has no information of the required Tx advance timing for the radio link. For distances above the guard space or in general a Predefined Value (PV), the start-up principles are to be extended. The time advance values become equal to N*b compensation values, where N is an integer and b is a fraction of maximum range, in the range of 0...Preset Maximum Value (PMV). The sequence can start from lower distances: N=1, N=2, until N*b equals the preset maximum value and cyclic back if in the whole range of N no synchronization and A-FIELD are received. The integer N may be incremented by one step or by several steps at a time.

During start-up, when preset values are chosen for compensation larger than the predefined value, such as the size of the guard space for example, it shall be guaranteed that no intruding occurs in previous slots. The inventive Propagation Delay Compensation method has to be used when such compensation values are encountered. That means, if the compensation values exceeds said PV a handover must be performed if the previous slot belongs to case 1 or case 2b.

The invention being thus described, it will be understood that the same may be varied in a plurality of ways. Such variations are not to be regarded as a departure from the scope of the invention. All such modifications as would be obvious to one skilled in the art are included within the scope of the following claims.

## Claims

1. A method of extending the reachable distance of a radio transmission link (26, 27) between a Radio Access Unit (RAU) or base station (18) and a remote fixed or mobile radio communication device (19) of a Time Division Multiple Access (TDMA) radio telecommunication system, in particular a radio telecommunication system operating in accordance with the Digital Enhanced Cordless Telecommunications (DECT) standard, arranged for compensating propagation delay at said transmission link (26, 27) by establishing (22) the distance or propagation delay between said RAU (18) and remote fixed or mobile radio communication device (19), and advancing (25) in time the transmission of a transmit (Tx) time slot, **characterized by** the steps of establishing (25) in respect of said Tx time slot one of a group of cases:
- the previous time slot is a receive time slot, case 1,
- the previous time slot is a transmit time slot having a link to the same RAU as said Tx time slot, case 2a,
- the previous time slot is a transmit time slot having a link to another RAU, case 2b, and
- in the event of case 1 or case 2b, if said distance or propagation delay between said RAU (18) and fixed or mobile radio communication device (19) is larger than a predetermined value related to a guard space or guard band between adjacent time slots, changing (25) the said Tx time slot to another available Tx time slot having a free previous transmit time slot or to another available Tx time slot which meets case 2a.

2. A method according to claim 1, wherein said guard space amounts 56 bits.

3. A method according to any of the previous claims, further comprising at set-up of a transmission link (26, 27) the steps of:
- advancing (25) said Tx time slot in said remote fixed or mobile radio communication device (19) according to a formula b*N, wherein b is a predefined fraction of a maximum range of said transmission link and wherein N is an integer ranging from 1 until b*N exceeds a predetermined maximum value, by stepwise incrementing said integer N until reception of said Tx time slot at said RAU (18),
- determining the value of said fraction b times said integer N, and
- in the event of case 1 or case 2b changing (25) the said Tx time slot if said product b*N exceeds a predetermined value.

4. A method according to claim 3, wherein said integer N is incremented by unit steps.

5. A method according to any of the previous claims, wherein said TDMA radio telecommunication system is Multi. Carrier (MC) Time Division Duplex (TDD) radio telecommunication system, wherein said Tx time slot is changed (25) to an available Tx time slot at the same or a different carrier.

6. An arrangement for extending the reachable distance of transmission links (26, 27) in a Time Division Multiple Access (TDMA) radio telecommunication system, in particular a radio telecommunication system operating in accordance with the Digital Enhanced Cordless Telecommunications (DECT) standard, said radio telecommunication system comprising Radio Access Units (RAU's) or base stations (18) operatively connecting to a (Public) Switched Telephone Network ((P)STN) and/or an Integrated Services Digital Network (ISDN) (5), and remote fixed or mobile radio telecommunication devices (19), said RAU's (18) and remote telecommunication devices (19) being arranged for establishing a radio transmission link (26, 27) between a RAU (18) and a remote fixed or mobile radio communication device (19), said arrangement further comprising means (22) for establishing the distance or propagation delay between said RAU (18) and remote fixed or mobile radio communication device (19), and means (25) for compensating said propagation delay at said transmission link (26, 27) by advancing in time the transmission of a transmit Tx time slot, **characterized in that** said arrangement comprising means (25) for establishing in respect of said Tx time slot one of group of cases:
- the previous time slot is a receive time slot, case 1,
- the previous time slot is a transmit time slot having a link to the same RAU as said Tx time slot, case 2a,
- the previous time slot is a transmit time slot having a link to another RAU, case 2b, and means which
- in the event of case 1 or case 2b, if said distance or propagation time delay between said RAU (18) and fixed or mobile radio communication device (19) is larger than a predetermined value related to a guard space between adjacent time slots, change the said Tx time slot to another available Tx time slot having a free previous transmit time slot or to another available Tx time slot which meets case 2a.

7. An arrangement according to claim 6, further comprising means (25) for performing at the set-up of a transmission link (26, 27) the steps of:
- advancing said Tx time slot in said remote fixed or mobile radio communication device (19) according to a formula b*N, wherein b is a predefined fraction of a maximum range of said transmission link and wherein N is an integer ranging from 1 until b*N exceeds a predetermined maximum value, by stepwise incrementing said integer N until reception of said Tx time slot at said RAU (18),
- determining the value of said fraction b times said integer N, and
- in the event of case 1 or case 2b changing the said Tx time slot if said product b*N exceeds a predetermined value.

8. An arrangement according to claim 7, wherein said means (25) for performing said steps at the set-up of a transmission link (26, 27) are arranged in said remote fixed or mobile radio communication devices (19).

9. An arrangement according to any of the claims 6, 7 or 8, wherein said means (25) for establishing the previous time slot with respect to said Tx time slot are arranged in said remote fixed or mobile radio telecommunication device (19).

10. A radio communication device (19) for use in an arrangement according to any of the claims 6, 7, 8 or 9.

11. A radio access unit (18) for use in an arrangement according to any of the claim 6, 7, 8 or 9.

## Patentansprüche

1. Verfahren zum Erweitern der erreichbaren Entfernung einer Funksendeverbindung (26, 27) zwischen einer Funkzugangseinheit (RAU) oder Basisstation (18) und einer dezentralen stationären oder mobilen Funkkommunikationsvorrichtung (19) eines Funktelekommunikationssystems mit Time Division Multiple Access (TDMA), insbesondere eines Funktelekammunikationssystems, das gemäß dem Standard Digital Enhanced Cordless Telecommunications (DECT) funktioniert, angeordnet zum Ausgleichen der Verbreitungsverzögerung an der Sendeverbindung (26, 27) durch Feststellen(22) der Entfernung oder Verbreitungsverzögerung zwischen der RAU (18) und der dezentralen stationären oder mobilen Funkkommunikationsvorrichtung (19), und zeitliches Vorverlegen (25) des Sendens eines Sende(Tx)-Zeitschlitzes, **gekennzeichnet durch** die Schritte des Feststellens(25)eines Falls einer Gruppe von Fällen in Bezug auf den Tx-Zeitschlitz:
- der vorhergehende Zeitschlitz ist ein Empfangszeitschlitz, Fall 1,
- der vorhergehende Zeitschlitz ist ein Sendezeitschlitz, der eine Verbindung mit der gleichen RAU wie der Tx-Zeitschlitz hat, Fall 2a,
- der vorhergehende Zeitschlitz ist ein Sendezeitschlitz, der eine Verbindung mit einer anderen RAU hat, Fall 2b, und
- in Fall 1 oder Fall 2b, wenn die Entfernung oder Verbreitungsverzögerung zwischen der RAU (18) und der stationären oder mobilen Funktelekommunikationsvorrichtung (19) größer ist als ein vorausbestimmter Wert in Zusammenhang mit einem Schutzraum oder Schutzband zwischen benachbarten Zeitschlitzen, Ändern (25) des Tx-Zeitschlitzes zu einem anderen verfügbaren Tx-Zeitschlitz, der einen freien vorhergehenden Sendezeitschlitz hat, oder zu einem anderen verfügbaren Tx-Zeitschlitz, der dem Fall 2a entspricht.

2. Verfahren nach Anspruch 1, wobei der Schutzraum 56 Bits beträgt.

3. Verfahren nach einem der vorhergehenden Ansprüche, das ferner beim Aufbauen einer Sendeverbindung (26, 27) die folgenden Schritte umfasst:
- Vorverlegen (25) des Tx-Zeitschlitzes in die stationäre oder mobile Funktelekommunikationsvorrichtung (19) gemäß einer Formel b*N, wobei b ein vorausbestimmter Bruchteil eines maximalen Bereichs der Sendeverbindung und N eine Ganzzahl ist, die von 1 ausgeht, bis b*N einen vorausbestimmten maximalen Wert überschreitet, indem die Ganzzahl N schrittweise inkrementiert wird, bis die RAU (18) den Tx-Zeitschlitz empfängt,
- Feststellen des Werts des Bruchteils b Mal der Ganzzahl N und
- im Falle des Falls 1 oder 2b, Wechseln (25) des Tx-Zeitschlitzes, wenn das Produkt b*N einen vorausbestimmten Wert überschreitet.

4. Verfahren nach Anspruch 3, wobei die ganzzahl N in Einerschritten inkrementiert wird.

5. Verfahren nach einem der vorhergehenden Ansprüche, wobei das TDMA-Funktelekommunikationssystem ein Multi Carrier (MC) Time Division Duplex (TDD)-Funktelekommunikationssystem ist, wobei der Tx-Zeitschlitz zu einem verfügbaren Tx-Zeitschlitz auf dem gleichen oder einem anderen Träger gewechselt (25) wird.

6. Anordnung zum Erweitern der erreichbaren Entfernung von Sendeverbindungen (26, 27) in einem Time Division Multiple Access (TDMA) Funktelekommunikationssystem, insbesondere einem Funktelekommunikationssystem, das gemäß dem Standard Digital Enhanced Cordless Telecommunications (DECT) funktioniert, wobei das Funktelekommunikationssystem Funkzugangseinheiten (RAU) oder Basisstationen (18) umfasst, die operativ mit einem (öffentlichen) vermittelten Fernsprechnetz ((P)STN) und/oder einem Integrated Services Digital Network (ISDN) (5) verbunden sind, und dezentrale stationäre oder mobile Funktelekommunikationsvorrichtungen (19), wobei die RAU (18) und die dezentralen Telekommunikationsvorrichtungen (19) zum Aufbauen einer Funksendeverbindung (26, 27) zwischen einer RAU (18) und einer dezentralen stationären oder mobilen Funktelekommunikationsvorrichtung (19) eingerichtet sind, wobei die Anordnung ferner Mittel (22) umfasst, um die Entfernung oder Verbreitungsverzögerung zwischen den RAU (18) und der dezentralen stationären oder mobilen Funktelekommunikationsvorrichtung (19) fest zu stellen, und Mittel (25), um die Verbreitungsverzögerung an der Sendeverbindung (26, 27) auszugleichen, indem die Übertragung eines Sende-Tx-Zeitschlitzes zeitlich vorverlegt wird, **dadurch gekennzeichnet, dass** die Anordnung Mittel (25) umfasst, um in Bezug auf den Tx-Zeitschlitz einen Falle einer Gruppe von Fällen zu erstellen:
- der vorhergehende Zeitschlitz ist ein Empfangszeitschlitz, Fall 1,
- der vorhergehende Zeitschlitz ist ein Sendezeitschlitz einer Verbindung zu der gleichen RAU wie der Tx-Zeitschlitz, Fall 2a,
- der vorhergehende Zeitschlitz ist ein Sendezeitschlitz mit einer Verbindung zu einer anderen RAU, Fall 2b, und Mittel, die
- in dem Fall des Falls 1 oder Falls 2b, wenn die Entfernung oder Verbreitungsverzögerungszeit zwischen der RAU (18) und der stationären oder mobilen Funkkommunikationsvorrichtung (19) größer ist als ein vorausbestimmter Wert in Zusammenhang mit einem Schutzraum zwischen den benachbarten Zeitschlitzen, der Tx-Leitschlitz zu einem anderen verfügbaren Tx-Zeitschlitz, der einen freien vorhergehenden Sendezeitschlitz hat, oder zu einem anderen verfügbaren Tx-Zeitschlitz, der dem Fall 2a entspricht, verlegt wird.

7. Anordnung nach Anspruch 6, die ferner Mittel (25) umfasst, um beim Einrichten einer Sendeverbindung (26, 27) die folgenden Schritte durchzuführen:
- Vorverlegen des Tx-Zeitschlitzes in die stationäre oder mobile Funktelekommunikationsvorrichtung (19) gemäß einer Formel b*N, wobei b ein vorausbestimmter Bruchteil eines maximalen Bereichs der Sendeverbindung und N eine Ganzzahl ist, die von 1 ausgeht, bis b*N einen vorausbestimmten maximalen Wert überschreitet, indem die Ganzzahl N schrittweise inkrementiert wird, bis die RAU (18) den Tx-Zeitschlitz empfängt,
- Feststellen des Werts des Bruchteils b Mal der Ganzzahl N und
- im Falle des Falls 1 oder 2b, Wechseln (25) des Tx-Zeitschlitzes, wenn das Produkt b*N einen vorausbestimmten Wert überschreitet.

8. Anordnung nach Anspruch 7, wobei die Mittel (25) zum Durchführen der Schritte beim Aufbauen einer Sendeverbindung (26, 27) in den dezentralen stationären oder mobilen Funkkommunikationsvorrichtungen (19) angeordnet sind.

9. Anordnung nach einem der Ansprüche 6, 7 oder 8, wobei die Mittel (25) zum Erstellen des vorhergehenden Zeitschlitzes in Bezug auf den Tx-Zeitschlitz in der dezentralen stationären oder mobilen Funktelekommunikationsvorrichtung (19) angeordnet sind.

10. Funkkommunikationsvorrichtung (19) für den Gebrauch in einer Anordnung nach einem der Ansprüche 6, 7, 8 oder 9.

11. Funkzugriffseinheit (18) zum Gebrauch in einer Anordnung nach einem der Anspräche 6, 7, 8 oder 9.

## Revendications

1. Procédé destiné à étendre la distance pouvant être atteinte par une liaison de transmission radio (26, 27) entre une unité d'accès radio (RAU, pour « *Radio Access Unit* ») ou station de base (18) et un dispositif de radiotélécommunication distant fixe ou mobile (19) d'un système de radiotélécommunication à accès multiple par répartition dans le temps (AMRT), en particulier d'un système de radiotélécommunication fonctionnant selon la norme DECT (pour « *Digital Enhanced Cordless Telecommunications » -* Télécommunications numériques sans fil améliorées), conçu pour compenser le temps de propagation sur ladite liaison de transmission (26, 27) en établissant (22) la distance ou temps de propagation entre ladite unité RAU (18) et le dispositif de radiocommunication distant fixe ou mobile (19) et en avançant (25) dans le temps l'émission d'un intervalle de temps d'émission (Tx), **caractérisé par** les étapes consistant à déterminer (25), pour ledit intervalle de temps Tx, un cas parmi les suivants :
- si l'intervalle de temps précédent est un intervalle de temps de réception, cas 1,
- si l'intervalle de temps précédent est un intervalle de temps d'émission possédant une liaison vers la même unité RAU que ledit intervalle de temps Tx, cas 2a,
- si l'intervalle de temps précédent est un intervalle de temps d'émission possédant une liaison vers une autre unité RAU, cas 2b, et
- dans les cas 1 et 2b, si ladite distance ou temps de propagation entre ladite unité RAU (18) et ledit dispositif de radiocommunication distant fixe ou mobile (19) est supérieur à une valeur prédéterminée liée à un espace de garde ou à une bande de garde entre des intervalles de temps adjacents, à déplacer (25) ledit intervalle de temps Tx vers un autre intervalle de temps Tx disponible ayant un intervalle de temps d'émission précédent libre ou vers un autre intervalle de temps Tx disponible qui répond au cas 2a.

2. Procédé selon la revendication 1, dans lequel ledit espace de garde est de 56 bits.

3. Procédé selon l'une quelconque des revendications précédentes, comprenant en outre, lors de l'établissement d'une liaison de transmission (26, 27), les étapes consistant à :
- avancer (25) ledit intervalle de temps Tx dans ledit dispositif de radiocommunication fixe ou mobile (19), d'après une formule b * N, où b est une fraction prédéfinie d'une portée maximale de ladite liaison de transmission et où N est un entier qui part de 1 et va jusqu'à ce que b * N dépasse une valeur maximale prédéterminée, en incrémentant progressivement ledit entier N jusqu'à réception dudit intervalle de temps Tx par ladite unité RAU (18),
- déterminer la valeur de ladite fraction b par ledit entier N, et
- dans les cas 1 et 2b, déplacer (25) ledit intervalle de temps Tx si ledit produit b * N dépasse une valeur prédéterminée.

4. Procédé selon la revendication 3, dans lequel ledit entier N est incrémenté par échelons unitaires.

5. Procédé selon l'une quelconque des revendications précédentes, dans lequel ledit système de radiotélécommunication AMRT est un système de radiotélécommunication à porteuses multiples (MC, pour « *Multi Carrier* ») et duplex par répartition dans le temps (TDD, pour *« Time Division Duplex* »), dans lequel ledit intervalle de temps Tx est déplacé (25) vers un intervalle de temps Tx disponible avec une porteuse identique ou différente.

6. Agencement destiné à étendre la distance pouvant être atteinte par des liaisons de transmission radio (26, 27) dans un système de radiotélécommunication à accès multiple par répartition dans le temps (AMRT), en particulier d'un système de radiotélécommunication fonctionnant selon la norme DECT, ledit système de radiotélécommunication comprenant des unités d'accès radio (RAU) ou stations de base (18), qui sont connectées opérationnellement à un réseau téléphonique commuté (public) ((P)STN) et/ou à un réseau numérique à intégration de services (RNIS) (5), et des dispositifs de radiotélécommunication distants fixes ou mobiles (19), lesdites unités RAU (18) et lesdits dispositifs de télécommunication distants (19) étant conçus pour établir une liaison de transmission radio (26, 27) entre une unité RAU (18) et un dispositif de radiotélécommunication distant fixe ou mobile (19), ledit agencement comprenant en outre un moyen (22) destiné à établir la distance ou temps de propagation entre ladite unité RAU (18) et ledit dispositif de radiotélécommunication distante fixe ou mobile (19), et un moyen (25) destiné à compenser ledit temps de propagation sur ladite liaison de transmission (26, 27) en avançant dans le temps l'émission d'un intervalle de temps d'émission (Tx), **caractérisé en ce que** ledit agencement comprend un moyen (25) destiné à déterminer, pour ledit intervalle de temps Tx, un cas parmi les suivants :
- si l'intervalle de temps précédent est un intervalle de temps de réception, cas 1,
- si l'intervalle de temps précédent est un intervalle de temps d'émission possédant une liaison vers la même unité RAU que ledit intervalle de temps Tx, cas 2a,
- si l'intervalle de temps précédent est un intervalle de temps d'émission possédant une liaison vers une autre unité RAU, cas 2b, et un moyen qui
- dans les cas 1 et 2b, si ladite distance ou retard de temps de propagation entre ladite unité RAU (18) et ledit dispositif de radiocommunication distant fixe ou mobile (19) est supérieur à une valeur prédéterminée liée à un espace de garde entre des intervalles de temps adjacents, déplace (25) ledit intervalle de temps Tx vers un autre intervalle de temps Tx disponible ayant un intervalle de temps d'émission précédent libre ou vers un autre intervalle de temps Tx disponible qui répond au cas 2a.

7. Agencement selon la revendication 6, comprenant en outre un moyen (25) destiné à exécuter, lors de l'établissement de la liaison de transmission (26, 27), les étapes consistant à :
- avancer ledit intervalle de temps Tx dans ledit dispositif de radiocommunication fixe ou mobile (19), d'après une formule b * N, où b est une fraction prédéfinie d'une portée maximale de ladite liaison de transmission et N est un entier qui part de 1 et va jusqu'à ce que b * N dépasse une valeur maximale prédéterminée, en incrémentant progressivement ledit entier N jusqu'à réception dudit intervalle de temps Tx par ladite unité RAU (10),
- déterminer la valeur de ladite fraction b par ledit entier N, et
- dans les cas 1 et 2b, déplacer ledit intervalle de temps Tx si ledit produit b * N dépasse une valeur prédéterminée.

8. Agencement selon la revendication 7, dans lequel ledit moyen (25) destiné à exécuter lesdites étapes lors de l'établissement d'une liaison de transmission (26, 27) est implanté dans lesdits dispositifs de radiocommunication distants fixes ou mobiles (19).

9. Agencement selon l'une quelconque des revendications 6, 7 ou 8, dans lequel ledit moyen (25) destiné à établir l'intervalle de temps précédent par rapport audit intervalle de temps Tx est implanté dans lesdits dispositifs de radiocommunication distants fixes ou mobiles (19).

10. Dispositif de radiocommunication (19) destiné à être utilisé dans un agencement selon l'une quelconque des revendications 6, 7, 8 ou 9.

11. Unité d'accès radio (18) destinée à être utilisée dans un agencement selon l'une quelconque des revendications 6, 7, 8 ou 9.
